# EUROPEAN PATENT APPLICATION

(11) **EP 2 871 268 A1**
(43) Date of publication of application: **13.05.2015**
(21) Application number: 14808476.7
(22) Date of filing: 03.03.2014
(51) Int. Cl.: D01F 9/12, D01F 8/18, D01F 1/09, D01F 11/16, D01F 11/14, D01F 11/12

(54) **METHOD FOR PREPARING CONDUCTIVE GRAPHENE COMPOSITE FIBER**

(30) Priority: 01.08.2013 CN 201310332049
(71) Applicant: Huawei Technologies Co., Ltd., Longgang District Shenzhen, Guangdong 518129 (CN); Zhejiang University, Zhejiang 310058 (CN)
(72) Inventor: GAO, Chao, Hangzhou Zhejiang 310058 (CN); HU, Xiaozhen, Hangzhou Zhejiang 310058 (CN); ZHOU, Xiaosong, Shenzhen Guangdong 518129 (CN); XU, Yan, Shenzhen Guangdong 518129 (CN)
(74) Representative: Pfenning, Meinig & Partner GbR
(86) International application number: PCT/CN2014/072689
(87) International publication number: WO 2015/014124

(57) **Abstract**

A graphene composite fiber includes graphene sheets and a polymer for aggregating the graphene sheets together. The polymer includes either or both of a hyperbranched polymer and polyvinyl alcohol. The graphene sheets and the polymer are stacked on each other to form a layered structure, and the graphene sheets are regularly arranged along an axial direction of the graphene composite fiber. In a production method of the graphene composite fiber, a graphene oxide is used as a raw material, which significantly improves tensile strength of the graphene composite fiber. Addition of the polymer provides good tenacity for the composite fiber. In a spinning process, rotated coagulant is used to increase a tensile force of a gelatinous fiber, so that the gelatinous fiber has high orientation and tacticity, thereby significantly improving strength of an obtained solid fiber. The final reduction process restores electrical conductivity of a graphene fairly well.

## Description

### TECHNICAL FIELD

The present invention relates to a composite fiber material, and in particular to an electrically conductive graphene composite fiber and a production method thereof.

### BACKGROUND

A carbon fiber is a new material with excellent performance, which has not only an intrinsic property of a carbon material, but also flexible processability of a textile fiber. Compared with a traditional glass fiber, the Young's modulus of the carbon fiber is more than 3 times that of the traditional glass fiber; compared with a Kevlar fiber (KF-49), not only the Young's modulus of the carbon fiber is approximately 2 times that of the Kevlar fiber, but also the carbon fiber has notable performance such as corrosion resistance and tensile strength. Therefore, the carbon fiber is widely used in the civil use, military, construction, chemical, industry, aerospace, and supercar fields.

Graphene is a two-dimensional layer of carbon atoms linked by means of sp2 hybridization, and has many excellent properties such as ultrahigh strength, extremely large specific surface area, high thermal conductivity and carrier mobility, and therefore has a broad application prospect in many fields such as transistors, super capacitors, selectively permeable membranes, and enhanced materials. If the ultrahigh strength of a single graphene sheet can be transferred to a macroscopic material, the strength of the single graphene sheet in the macroscopic material is comparable to that of the carbon fiber. Research finds that, by using a wet spinning technique, a liquid crystalline solution of a graphene oxide can be converted into a macroscopic graphene fiber. However, strength of the obtained graphene fiber is approximately 100 to 200 MPa, which is still much lower than the strength of the single graphene sheet. The obtained graphene fiber can meet practical application requirements only when its strength and electrical conductivity are further improved.

### SUMMARY

An objective of the present invention is to provide a production method of an electrically conductive graphene composite fiber having high strength and electrical conductivity.

A graphene composite fiber includes graphene sheets and a polymer for aggregating the graphene sheets together, where the polymer includes either or both of a hyperbranched polymer and polyvinyl alcohol, the graphene sheets and the polymer are stacked on each other to form a layered structure, and the graphene sheets are regularly arranged along an axial direction of the graphene composite fiber.

A production method of an electrically conductive graphene composite fiber includes: step 1, adding 1 part by weight of a graphene oxide, 50 to 2000 parts by weight of a solvent, and 0.1 to 100 parts by weight of a polymer to a reactor, and stirring, so as to obtain nanocomposite material spinning slurry of the polymer and graphene, where the polymer includes either or both of a hyperbranched polymer and polyvinyl alcohol; step 2, extruding the spinning slurry through a spinning nozzle with a diameter of 5 to 5000 µm at a rate of 1 to 100 mL/h, retaining the spinning slurry in rotated coagulant for 1 to 3600s to coagulate the spinning slurry into fibers; and step 3, washing the coagulated fiber product, drying the coagulated fiber product in a vacuum, and then performing reduction to obtain the graphene composite fiber.

Strength of the graphene composite fiber mainly depends on interactions between graphene sheets. For a fiber formed by graphene sheets, there are mainly Van der Waals force and π-π interactions between the graphene sheets. However, a polymer having a large number of functional groups exists between the graphene sheets in this embodiment, and the polymer and hydroxyl and carboxyl groups in the graphene sheets form hydrogen bonds or ionic bonds, which act like glue to "bond" adjacent graphene sheets together, thereby increasing the strength and electrical conductivity of the graphene composite fiber.

### BRIEF DESCRIPTION OF DRAWINGS

FIG. 1 is a digital camera photo of a graphene composite fiber wound around a roller of polytetrafluoroethylene according to an embodiment of the present invention;
FIG. 2 is a partial SEM image of a graphene composite fiber wound around a roller of polytetrafluoroethylene according to an embodiment of the present invention; and
FIG. 3 is a cross-sectional SEM image of the graphene composite fiber according to an embodiment of the present invention in FIG. 2.

### DESCRIPTION OF EMBODIMENTS

### Embodiment 1

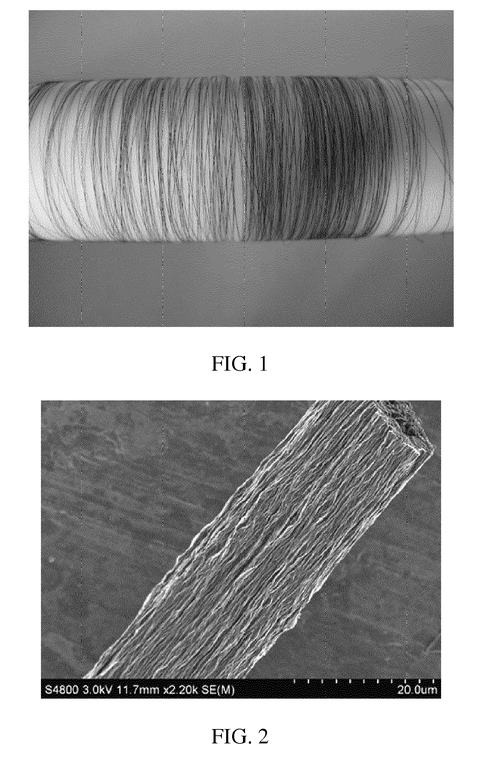

As shown in FIG. 1 to FIG. 3, a graphene composite fiber provided by an embodiment of the present invention includes graphene sheets and a polymer for aggregating the graphene sheets together. The graphene sheets and the polymer are closely stacked to form a layered structure, and the graphene sheets are regularly arranged along an axial direction of the fiber. The polymer includes either or both of a hyperbranched polymer and polyvinyl alcohol. The graphene composite fiber is a black fiber having a diameter of 5 to 5000 µm.

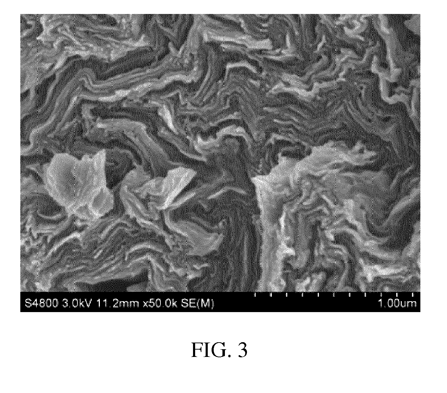

Particularly, as shown in FIG. 2, the graphene sheets in the fiber are all arranged along the axial direction of the fiber, and therefore have a very high tacticity. Particularly, as shown in FIG. 3, the graphene sheets and the added polymer are closely stacked to form a layered structure, laying a basis for high strength of the graphene sheets.

The hyperbranched polymer includes one or more of hyperbranched polyester, a hyperbranched polyamide, and hyperbranched polyglycidyl ether.

Strength of the graphene composite fiber in this embodiment of the present invention mainly depends on interactions between graphene sheets. For a fiber formed by graphene sheets alone, there are mainly Van der Waals force and π-π interactions between the graphene sheets. However, in this embodiment, a polymer having a large number of functional groups is introduced into the graphene sheets, and the polymer and hydroxyl and carboxyl groups in the graphene sheets form hydrogen bonds or ionic bonds, which act like glue to "bond" adjacent graphene sheets together, thereby increasing the strength of the graphene composite fiber.

### Embodiment 2

This embodiment of the present invention provides a production method of an electrically conductive graphene composite fiber, including:
Step 1: Add 1 part by weight of a graphene oxide, 50 to 2000 parts by weight of a solvent, and 0.1 to 100 parts by weight of a polymer to a reactor, and stir, so as to obtain a nanocomposite material spinning slurry of the polymer and graphene, where the polymer includes either or both of a hyperbranched polymer and polyvinyl alcohol.
Step 2: Extrude the spinning slurry through a spinning nozzle with a diameter of 5 to 5000 µm at a rate of 1 to 100 mL/h, and retain the spinning slurry in rotated coagulant for 1 to 3600s to coagulate the spinning slurry into fibers.
Step 3: Wash the coagulated fiber product, dry the coagulated fiber product in a vacuum, and then perform reduction to obtain the graphene composite fiber.

A diameter of the electrically conductive graphene composite fiber ranges from 5 µm to 5000 µm.

The hyperbranched polymer includes one or more of hyperbranched polyester, a hyperbranched polyamide, and hyperbranched polyglycidyl ether.

The solvent in step 1 includes one ore more of N-methyl-2-pyrolidone, N,N-dimethylformamide, and water.

The coagulant in step 2 includes one or more of a NaOH aqueous solution, a KOH aqueous solution, a CaCl2 aqueous solution, a NaOH methanol solution, a KOH methanol solution, a CaCl2 methanol solution, a NaOH ethanol solution, a KOH ethanol solution, a CaCl2 ethanol solution, diethyl ether, ethyl acetate, acetone, and petroleum ether.

A reduction method in step 3 includes thermal reduction and chemical reduction. A reducing agent used in the chemical reduction includes one or more of hydrazine hydrate, vitamin C, lysine, potassium hydroxide, sodium hydroxide, hydroiodic acid, and acetic acid.

The production method of the graphene composite fiber in this embodiment of the present invention may include the following specific implementation manners:

### 1. In another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 20 mg of the graphene oxide, 1 g of an N-methyl-2-pyrolidone solvent, and 2 g of hyperbranched polyester to the reactor, and stirring for 1 hour, so as to obtain a nanocomposite material spinning slurry of the hyperbranched polyester and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600s to coagulate the spinning slurry into fibers, specifically includes: extruding the nanocomposite material spinning slurry of the hyperbranched polyester and graphene through a spinning nozzle with a diameter of 5000 µm at a rate of 1 mL/h, and retaining the nanocomposite material spinning slurry in a rotated KOH methanol solution for 50s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 40 degrees for 24 hours, and then performing reduction by using hydrazine hydrate, so as to obtain a composite fiber of the hyperbranched polyester and graphene, where the composite fiber has a diameter of 5000 µm, a breaking strength of 400 MPa, a breaking elongation of 5%, and an electrical conductivity of 200 S/m.

### 2. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 20 mg of the graphene oxide, 0.5 g of an N-methyl-2-pyrolidone solvent, and 2 mg of a hyperbranched polyamide to the reactor, and stirring for 4 hours, so as to obtain a nanocomposite material spinning slurry of the hyperbranched polyamide and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600s to coagulate the spinning slurry into fibers, specifically includes: extruding the nanocomposite material spinning slurry of the hyperbranched polyamide and graphene through a spinning nozzle with a diameter of 5 µm at a rate of 100 mL/h, and retaining the nanocomposite material spinning slurry in a rotated NaOH methanol solution for 5s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 60 degrees for 24 hours, and then performing reduction by using vitamin C, so as to obtain a composite fiber of the hyperbranched polyamide and graphene, where the composite fiber has a diameter of 5 µm, a breaking strength of 450 MPa, a breaking elongation of 10%, and an electrical conductivity of 2000 S/m.

### 3. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 20 mg of the graphene oxide, 40 g of an N,N-dimethylformamide solvent, and 100 mg of hyperbranched polyglycidyl ether to the reactor, and stirring for 6 hours, so as to obtain a nanocomposite material spinning slurry of the hyperbranched polyglycidyl ether and graphene.

In the foregoing step 2, the extruding the spinning slurry through a spinning nozzle with a diameter of 5 to 5000 µm at a rate of 1 to100 mL/h, and retaining the spinning slurry in rotated coagulant for 1 to 3600s to coagulate the spinning slurry into fibers, specifically includes: extruding the nanocomposite material spinning slurry of the hyperbranched polyglycidyl ether and graphene through a spinning nozzle with a diameter of 100 µm at a rate of 10 mL/h, and retaining the nanocomposite material spinning slurry in rotated diethyl ether for 3600s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 60 degrees for 24 hours, and then performing reduction by using vitamin C and lysine, so as to obtain a composite fiber of the hyperbranched polyglycidyl ether and graphene, where the composite fiber has a diameter of 100 µm, a breaking strength of 500 MPa, a breaking elongation of 15%, and an electrical conductivity of 3000 S/m.

### 4. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 20 mg of the graphene oxide, 10 g of an N,N-dimethylformamide solvent, and 200 mg of polyvinyl alcohol to the reactor, and stirring for 24 hours, so as to obtain a nanocomposite material spinning slurry of the polyvinyl alcohol and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600s to coagulate the spinning slurry into fibers, specifically includes: extruding the nanocomposite material spinning slurry of the polyvinyl alcohol and graphene through a spinning nozzle with a diameter of 50 µm at a rate of 20 mL/h, and retaining the nanocomposite material spinning slurry in rotated acetone for 360s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 60 degrees for 24 hours, and then performing reduction by using hydroiodic acid, so as to obtain a composite fiber of the polyvinyl alcohol and graphene, where the composite fiber has a diameter of 50 µm, a breaking strength of 550 MPa, a breaking elongation of 8%, and an electrical conductivity of 3500 S/m.

### 5. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 20 mg of the graphene oxide, 10 g of a water solvent, and 200 mg of a hyperbranched polyamide to the reactor, and stirring for 3 hours, so as to obtain a nanocomposite material spinning slurry of the hyperbranched polyamide and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600s to coagulate the spinning slurry into fibers, specifically includes: extruding the nanocomposite material spinning slurry of the hyperbranched polyamide and graphene through a spinning nozzle with a diameter of 800 µm at a rate of 1 mL/h, and retaining the nanocomposite material spinning slurry in a rotated CaCl2 aqueous solution for 1s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 80 degrees for 24 hours, and then performing reduction by using acetic acid, so as to obtain a composite fiber of the hyperbranched polyamide and graphene, where the composite fiber has a diameter of 800 µm, a breaking strength of 450 MPa, a breaking elongation of 5%, and an electrical conductivity of 1000 S/m.

### 6. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 10 mg of the graphene oxide, 10 g of a water solvent water, and 200 mg of a hyperbranched polyamide to the reactor, and stirring for 24 hours, so as to obtain a nanocomposite material spinning slurry of the hyperbranched polyamide and graphene.

In the foregoing step 2, the extruding the spinning slurry through a spinning nozzle with a diameter of 5 to 5000 µm at a rate of 1 to100 mL/h, and retaining the spinning slurry in rotated coagulant for 1 to3600sto coagulate the spinning slurry into fibers, specifically includes: extruding the nanocomposite material spinning slurry of the hyperbranched polyamide and graphene through a spinning nozzle with a diameter of 5000 µm at a rate of 1 mL/h, and retaining the nanocomposite material spinning slurry in a rotated CaCl2 ethanol solution for 50s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 80 degrees for 24 hours, and then performing reduction by using a mixture of hydroiodic acid and acetic acid, so as to obtain a composite fiber of the hyperbranched polyamide and graphene, where the composite fiber has a diameter of 5000 µm, a breaking strength of 515 MPa, a breaking elongation of 5%, and an electrical conductivity of 5000 S/m.

### 7. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 10 mg of the graphene oxide, 10 g of an N,N-dimethylformamide solvent, and 200 mg of hyperbranched polyester to the reactor, and stirring for 10 hours, so as to obtain a nanocomposite material spinning slurry of the hyperbranched polyester and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600sto coagulate the spinning slurry into fibers, specifically includes: extruding the nanocomposite material spinning slurry of the hyperbranched polyester and graphene through a spinning nozzle with a diameter of 5000 µm at a rate of 1 mL/h, and retaining the nanocomposite material spinning slurry in rotated ethyl acetate for 50s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 80 degrees for 24 hours, and then performing reduction by using KOH, so as to obtain a composite fiber of the hyperbranched polyester and graphene, where the composite fiber has a diameter of 5000 µm, a breaking strength of 545 MPa, a breaking elongation of 5%, and an electrical conductivity of 4500 S/m.

### 8. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 10 mg of the graphene oxide, 10 g of an N,N-dimethylformamide solvent, and 200 mg of a hyperbranched polyamide to the reactor, and stirring for 10 hours, so as to obtain a nanocomposite material spinning slurry of the hyperbranched polyamide and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600sto coagulate the spinning slurry into fibers, specifically includes: extruding the nanocomposite material spinning slurry of the hyperbranched polyamide and graphene through a spinning nozzle with a diameter of 100 µm at a rate of 10 mL/h, and retaining the nanocomposite material spinning slurry in rotated petroleum ether for 50s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 80 degrees for 24 hours, and then performing reduction by using NaOH, so as to obtain a composite fiber of the hyperbranched polyamide and graphene, where the composite fiber has a diameter of 100 µm, a breaking strength of 460 MPa, a breaking elongation of 5%, and an electrical conductivity of 1200 S/m.

### 9. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 10 mg of the graphene oxide, 10 g of an N-methyl-2-pyrolidone solvent, and 200 mg of hyperbranched polyester to the reactor, and stirring for 5 hours, so as to obtain a nanocomposite material spinning slurry of the hyperbranched polyester and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600s to coagulate the spinning slurry into fibers, specifically includes: extruding the nanocomposite material spinning slurry of the hyperbranched polyester and graphene through a spinning nozzle with a diameter of 50 µm at a rate of 5 mL/h, and retaining the nanocomposite material spinning slurry in rotated petroleum ether for 50s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 80 degrees for 24 hours, and then performing thermal reduction at 500 degrees, so as to obtain a composite fiber of the hyperbranched polyester and graphene, where the composite fiber has a diameter of 50 µm, a breaking strength of 525 MPa, a breaking elongation of 5%, and an electrical conductivity of 2100 S/m.

### 10. In yet another embodiment of the present invention, the foregoing steps may be specifically:

In the foregoing step 1, the adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, specifically includes: adding 10 mg of the graphene oxide, 10 g of an N-methyl-2-pyrolidone solvent, and 200 mg of polyvinyl alcohol to the reactor, and stirring for 20 hours, so as to obtain a nanocomposite material spinning slurry of the polyvinyl alcohol and graphene.

In the foregoing step 2, the extruding the spinning slurry through a spinning nozzle with a diameter of 5 to 5000 µm at a rate of 1 to 100 mL/h, and retaining the spinning slurry in rotated coagulant for 1 to 3600s to coagulate the spinning slurry into fibers, specifically includes: extruding the nanocomposite material spinning slurry of the polyvinyl alcohol and graphene through a spinning nozzle with a diameter of 5 µm at a rate of 15 mL/h, and retaining the nanocomposite material spinning slurry in a rotated KOH ethanol solution for 50s to coagulate the nanocomposite material spinning slurry into fibers.

In the foregoing step 3, the washing the coagulated fiber product, drying the coagulated fiber product in a vacuum, and then performing reduction to obtain the graphene composite fiber, specifically includes: collecting the coagulated fiber product by using a winder, washing the coagulated fiber product, drying the coagulated fiber product in a vacuum at 80 degrees for 24 hours, and then performing reduction by using acetic acid, so as to obtain a composite fiber of the polyvinyl alcohol and graphene, where the composite fiber has a diameter of 5 µm, a breaking strength of 520 MPa, a breaking elongation of 5%, and an electrical conductivity of 1300 S/m.

The spinning nozzle in the foregoing specific implementation manners includes spinning capillaries.

In the embodiments of the present invention, large graphene oxide sheets are used as raw materials, which significantly improve tensile strength of a graphene composite fiber. Addition of a polymer provides good tenacity for the composite fiber. Compared with the prior art, in a spinning process, tedious steps such as aeration, heating, reaction, centrifugation, and washing are removed, so that a process is significantly simplified, and is easy to operate, energy saving, and environment friendly. In the spinning process, rotated coagulant is used to increase a tensile force of a gelatinous fiber, so that the gelatinous fiber has high orientation and tacticity, thereby significantly improving strength of an obtained solid fiber. The final reduction process restores electrical conductivity of a graphene fairly well, so that an obtained fiber has an electrical conductivity comparable to that of graphene paper (which is a macroscopic material formed by means of suction filtration of a graphene solution, and is similar to paper in form). The graphene composite fiber obtained in the embodiments of the present invention has advantages of high strength, good tenacity, and high electrical conductivity, may be produced on a large scale, and may be widely used in the fields of electrically conductive fabrics, reinforcement of materials, electrically conductive devices, and the like.

The foregoing specifically describes the present invention by using the embodiments. The embodiments are merely intended to further describe the present invention, and should not be construed as a limitation on the protection scope of the present invention. Unessential changes and adjustments made by a person skilled in the art according to content of the present invention shall fall within the protection scope of the present invention.

## Claims

1. A graphene composite fiber, comprising graphene sheets and a polymer for aggregating the graphene sheets together, wherein the polymer comprises either or both of a hyperbranched polymer and polyvinyl alcohol, the graphene sheets and the polymer are interleaved and stacked to form a layered structure, and the graphene sheets are regularly arranged along an axial direction of the graphene composite fiber.

2. The electrically conductive graphene composite fiber according to claim 1, wherein the hyperbranched polymer comprises one or more of hyperbranched polyester, a hyperbranched polyamide, and hyperbranched polyglycidyl ether.

3. The electrically conductive graphene composite fiber according to claim 1, wherein the polymer comprises one or two of hyperbranched polyester, a hyperbranched polyamide, hyperbranched polyglycidyl ether, and polyvinyl alcohol.

4. The electrically conductive graphene composite fiber according to any one of claims 1 to 3, wherein the graphene composite fiber has a diameter of 5 to 5000 µm.

5. A production method of an electrically conductive graphene composite fiber, wherein the method comprises:
step 1: adding 1 part by weight of a graphene oxide, 50 to 2000 parts by weight of a solvent, and 0.1 to 100 parts by weight of a polymer to a reactor, and stirring, so as to obtain a nanocomposite material spinning slurry of the polymer and graphene, wherein the polymer comprises either or both of a hyperbranched polymer and polyvinyl alcohol;
step 2: extruding the spinning slurry through a spinning nozzle with a diameter of 5 to 5000 µm at a rate of 1 to 100 mL/h, retaining the spinning slurry in rotated coagulant for 1 to 3600s, to coagulate the spinning slurry into fibers; and
step 3: washing the coagulated fiber product, drying the coagulated fiber product in a vacuum, and then performing reduction to obtain the graphene composite fiber.

6. The production method of an electrically conductive graphene composite fiber according to claim 5, wherein the polymer comprises one or two of hyperbranched polyester, a hyperbranched polyamide, hyperbranched polyglycidyl ether, and polyvinyl alcohol.

7. The production method of an electrically conductive graphene composite fiber according to claim 6, wherein the solvent of 50 to 2000 parts by weight in step 1 comprises one or more of N-methyl-2-pyrolidone, N,N-dimethylformamide, and water.

8. The production method of an electrically conductive graphene composite fiber according to claim 6, wherein the coagulant in step 2 comprises one or more of a NaOH aqueous solution, a KOH aqueous solution, a CaCl2 aqueous solution, a NaOH methanol solution, a KOH methanol solution, a CaCl2 methanol solution, a NaOH ethanol solution, a KOH ethanol solution, a CaCl2 ethanol solution, diethyl ether, ethyl acetate, acetone, and petroleum ether.

9. The production method of an electrically conductive graphene composite fiber according to claim 6, wherein a reduction method in step 3 comprises thermal reduction or chemical reduction, wherein a reducing agent used in the chemical reduction comprises one or more of hydrazine hydrate, vitamin C, lysine, potassium hydroxide, sodium hydroxide, hydroiodic acid, and acetic acid.

10. The production method of an electrically conductive graphene composite fiber according to any one of claims 5 to 9, wherein the spinning nozzle in step 2 comprises spinning capillaries
